# EUROPEAN PATENT APPLICATION

(11) **EP 3 343 670 A1**
(43) Date of publication of application: **04.07.2018**
(21) Application number: 17210567.8
(22) Date of filing: 26.12.2017
(51) Int. Cl.: H01M 2/10, H01M 10/625, H01M 10/6563, H01M 10/6556, H01M 10/6557, H01M 10/6566

(54) **BATTERY-PACK-COOLING DEVICE**

(30) Priority: 28.12.2016 JP 2016255765
(71) Applicant: Mitsubishi Jidosha Kogyo Kabushiki Kaisha, Tokyo 108-8410 (JP); Mitsubishi Jidosha Engineering Kabushiki Kaisha, Aichi 444-8501 (JP)
(72) Inventor: SUZUKI, Hiroyasu, Minato-ku, Tokyo 1088410 (JP); GOTO, Shinichi, OKAZAKI-shi, Aichi 4448501 (JP); YAMAMOTO, Takanori, OKAZAKI-shi, Aichi 4448501 (JP)
(74) Representative: Regimbeau

(57) **Abstract**

A battery-pack-cooling device that cools a battery pack, the battery pack including a plurality of battery modules that are provided in a space enclosed by a case and a cover. The plurality of battery modules are arranged at intervals. The device includes a guiding member provided in the space to cover, from above, an area where the plurality of battery modules are arranged and to guide cooling air generated by a cooling-air-generating unit; and a cooling-air-introducing portion provided to the guiding member and that introduces the cooling air guided by the guiding member into at least one of a space above the battery modules and a space between adjacent ones of the battery modules.

## Description

### BACKGROUND OF THE INVENTION

### 1. Field of the Invention

The present invention relates to a battery-pack-cooling device.

### 2. Description of the Related Art

A vehicle including an electric motor as an electric drive source or a vehicle including both an electric motor and an internal-combustion engine includes a high-voltage, large-capacity battery pack serving as a power source unit for the electric motor. The battery pack includes a plurality of battery modules that are arranged at intervals in a space enclosed by a case and a cover. Each of the battery modules generates heat while being charged with electricity and while discharging electricity. Hence, the battery pack is provided with a cooling device. The cooling device includes a member having air-introducing portions, such as slits, provided above the battery modules, whereby air in the space provided in the battery pack is circulated, and the battery modules are thus cooled. An example of such a device is disclosed by Japanese Unexamined Patent Application Publication No. 2015-216070.

### SUMMARY OF THE INVENTION

In the above known device, air is circulated in the space where the battery modules are provided, whereby the battery modules are cooled. However, in terms of cooling efficiency, there is still some room for improvement.

According to an aspect of the present invention, there is provided a battery-pack-cooling device that cools a battery pack, the battery pack including a plurality of battery modules that are provided in a space enclosed by a case and a cover. The plurality of battery modules are arranged at intervals. The device includes a guiding member provided in the space to cover, from above, an area where the plurality of battery modules are arranged and to guide cooling air generated by a cooling-air-generating unit; and a cooling-air-introducing portion provided to the guiding member and that introduces the cooling air guided by the guiding member into at least one of a space above the battery modules and a space between adjacent ones of the battery modules.

### BRIEF DESCRIPTION OF THE DRAWINGS

Fig. 1 is a schematic diagram of a vehicle including a battery-pack-cooling device according to a general embodiment of the present invention;
Fig. 2 is an exploded perspective view of a battery pack and the cooling device according to the general embodiment of the present invention;
Fig. 3 is a plan view of the battery pack and illustrates an internal configuration thereof;
Fig. 4 illustrates a configuration of the cooling device and how cooling air flows;
Fig. 5 illustrates a configuration according to a first embodiment of the present invention;
Fig. 6 illustrates a configuration according to a second embodiment of the present invention;
Fig. 7 illustrates a cooling-air-adjusting portion provided on the downstream side of a cooling-air-introducing portion;
Fig. 8 illustrates the cooling-air-adjusting portion provided on the upstream side of the cooling-air-introducing portion;
Fig. 9 illustrates a configuration according to a third embodiment of the present invention in which the cooling-air-adjusting portion is provided between a group of battery modules and a guiding member and on the downstream side of the cooling-air-introducing portion;
Fig. 10 illustrates another configuration according to the third embodiment of the present invention in which the cooling-air-adjusting portion is provided between the group of battery modules and the guiding member and on the upstream side of the cooling-air-introducing portion;
Fig. 11 illustrates a configuration according to a fourth embodiment of the present invention in which the cooling-air-adjusting portion is a flow-path-narrowing portion;
Fig. 12 is a perspective view of a configuration according to a fifth embodiment of the present invention in which the cooling-air-adjusting portion is a duct;
Fig. 13 is a sectional view of the configuration according to the fifth embodiment of the present invention in which the cooling-air-adjusting portion is a duct;
Fig. 14 illustrates a configuration according to a sixth embodiment of the present invention in which the cooling-air-adjusting portion is a member whose shape changes with temperature;
Fig. 15 illustrates a modification of the sixth embodiment; and
Fig. 16 illustrates a modification in which the cooling-air-adjusting portion is provided at an introduction hole.

### DESCRIPTION OF THE PREFERRED EMBODIMENTS

Embodiments of the present invention and modifications thereof will now be described with reference to the accompanying drawings, wherein like reference numerals denote like elements and elements having like functions, and redundant descriptions of such elements are omitted. For easy understanding, some elements are occasionally omitted from the drawings.

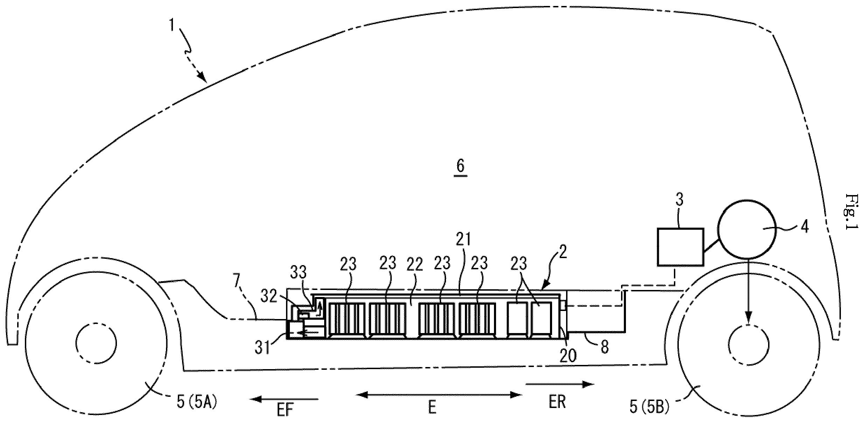

Referring to Fig. 1, in a vehicle 1 according to a general embodiment of the present invention, electric power is supplied from a battery pack 2 serving as a power source unit to an electric motor 4 serving as a drive unit through an inverter 3, whereby the electric motor 4 is rotated, and wheels 5 are rotated. Thus, the vehicle 1 can travel. The vehicle 1 may be either an electric vehicle including the electric motor 4 or a hybrid vehicle including both the electric motor 4 and an internal-combustion engine. In the vehicle 1 according to the general embodiment, the electric motor 4 rotates rear wheels 5B, serving as driving wheels, among the wheels 5. Alternatively, the electric motor 4 may rotate front wheels 5A among the wheels 5. The battery pack 2 is mounted on a shielding plate 8 provided below a floor 7 of a cabin 6 of the vehicle 1.

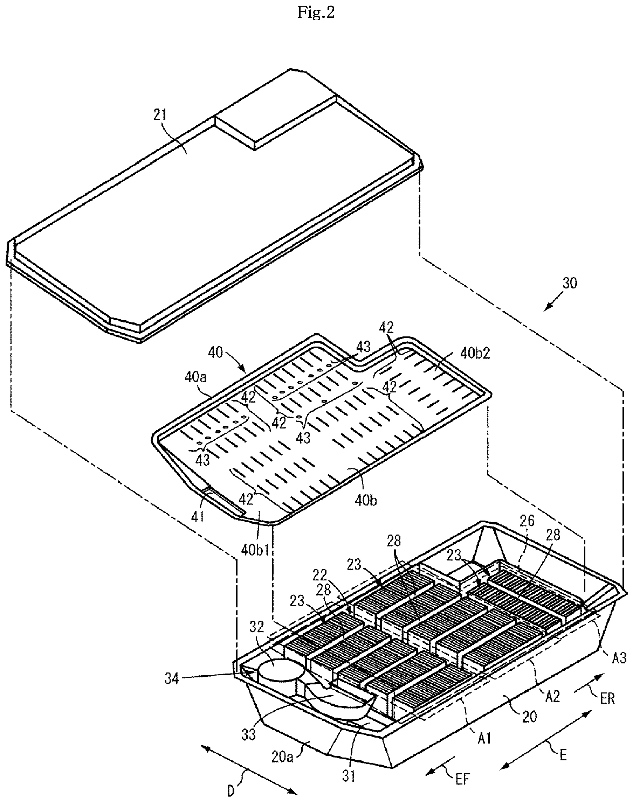

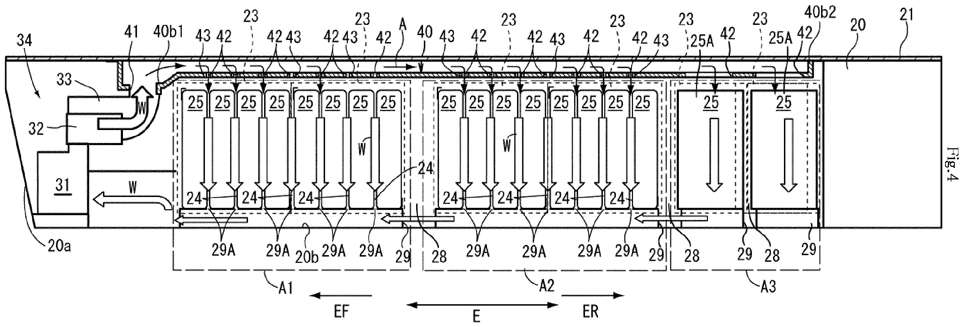

Referring to Fig. 2, the battery pack 2 includes a case 20 whose top is open, and a cover 21 that covers the open top of the case 20. Referring to Figs. 1 and 4, the battery pack 2 has a space 22 enclosed by the case 20 and the cover 21 and includes a plurality of battery modules 23 that are arranged at intervals 28 in the case 20. The battery modules 23 each include a plurality of battery cells 25 arranged in parallel such that a path 24 is provided between adjacent ones of the battery cells 25. The path 24 extends vertically continuously between the adjacent battery cells 25.

In the general embodiment, as illustrated in Figs. 2 to 4, the battery modules 23 are grouped into three. The three groups are provided in a first area A1, a second area A2, and a third area A3, respectively. The battery modules 23 in each of the first area A1 and the second area A2 are arranged at the intervals 28 in a vehicle width direction D and such that the battery cells 25 are arranged side by side in a vehicle front-rear direction E. The battery modules 23 in the third area A3 are arranged at the intervals 28 in the vehicle front-rear direction E and such that the battery cells 25 are arranged side by side in the vehicle width direction D. The battery modules 23 are mounted on a plurality of seats 29 provided on a bottom 20b of the case 20, whereby a gap is provided between the bottom 20b and the battery modules 23. In the drawings, arrow EF points the front side of the vehicle 1, and arrow ER points the rear side of the vehicle 1. Referring to Fig. 4, the seats 29 each have openings 29A provided in correspondence with the paths 24 so that cooling air W flowing through the paths 24 is allowed to flow toward the bottom 20b.

The battery pack 2 is capable of outputting a high voltage with the battery modules 23 connected in series such that the positive terminals thereof are connected to one another and the negative terminals thereof are connected one another. The battery cells 25 are each, for example, a secondary battery such as a lithium ion cell and each generate heat when charged with electricity and when discharging electricity. If the amount of heat generation exceeds the allowable level that is set forth for the battery cell 25, the temperature of the battery cell 25 may reach an excessively high level, for example, 300°C or higher. Hence, the battery pack 2 is provided with a cooling device 30.

The cooling device 30 includes an evaporator 31 serving as a cold-air-generating unit and provided at a front end 20a of the case 20 that is on the front side of the vehicle 1, and a guiding member (duct panel) 40 provided in the space 22, illustrated in Fig. 4, and above the plurality of battery modules 23 in such a manner as to cover, from above, an arrangement area 26 where the battery modules 23 are arranged. The cover 21 and the guiding member (duct panel) 40 in combination form a flow path for the cooling air W.

A fan 32 that sends cold air generated by the evaporator 31 and a cold-air duct 33 that redirects the cold air, or changes the direction of the air, sent from the fan 32 are provided between the evaporator 31 and the duct panel 40. In the general embodiment, the evaporator 31, the fan 32, and the cold-air duct 33 form a cooling-air-generating unit 34.

The duct panel 40 has a bottom part 40b that is depressed from a peripheral part 40a. The bottom part 40b has a connection port 41 at a front end 40b1 thereof. The connection port 41 is connected to the cold-air duct 33. The cold air generated by the evaporator 31 and flowing through the cold-air duct 33 is guided as cooling air W along the bottom part 40b of the duct panel 40.

### First Embodiment

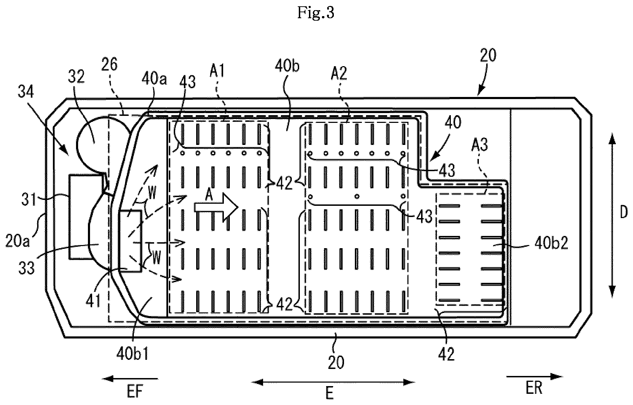

Referring to Figs. 3 and 4, the bottom part 40b of the duct panel 40 has a plurality of slits 42 and a plurality of introduction holes 43 serving as cooling-air-introducing portions that allow the cooling air W guided by the duct panel 40 to be introduced into a space below the duct panel 40.

The plurality of slits 42 are provided in three areas that correspond to the first area A1 to the third area A3 and allow the cooling air W to flow down over the battery modules 23. The slits 42 are positioned above the battery modules 23 and each extend in a direction intersecting, in a specific plane, the direction in which the battery cells 25 are arranged side by side. Furthermore, the slits 42 overlap some paths 24, respectively, each provided between adjacent battery cells 25. In the first embodiment, surfaces 25A and 25B of each two respective battery cells 25 that face each other with the path 24 interposed therebetween are each a flat surface whose long side extends in a vehicle top-bottom direction. The slits 42 are provided side by side in a direction A in which the cooling air W flows.

The plurality of introduction holes 43 are provided in the first area A1 and the second area A2 and are positioned above some of the intervals 28 each provided between adjacent ones of the battery modules 23 that are arranged side by side in the vehicle width direction D. In the first embodiment, the plurality of introduction holes 43 are provided in a part of the first area A1 and in a part of the second area A2 and are arranged side by side in the vehicle front-rear direction E. The introduction holes 43 are provided in a part of the first area A1 and in a part of the second area A2 because the temperature of the heat generated by the battery modules 23 in those areas is higher than the temperature of the heat generated by the battery modules 23 in the other areas. Hence, the plurality of introduction holes 43 only need to be positioned near some battery modules 23 whose temperature tends to become high, and the positions of the introduction holes 43 are not limited to those described in the first embodiment. Depending on the shape of the case 20 and where the battery pack 2 is positioned in the vehicle 1, heat tends to accumulate in any arbitrary areas in the case 20 because of heat from the outside or the like. Consequently, the battery modules 23, i.e., the battery cells 25, provided in those areas become less likely to release heat. Therefore, in the first embodiment, the introduction holes 43 are arranged so as to feed more cooling air W to battery modules 23 positioned in the areas where heat tends to accumulate than battery modules 23 positioned in the other areas.

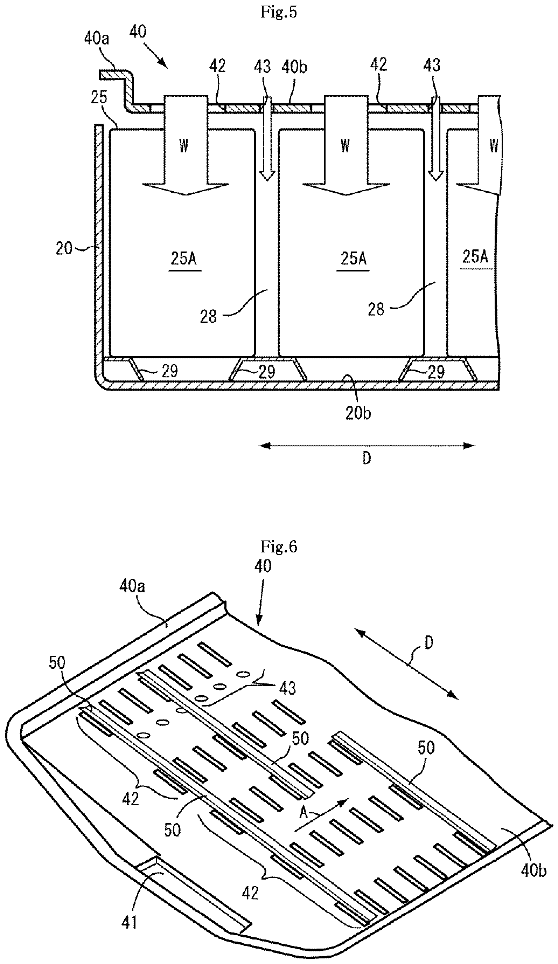

With the cooling device 30 configured as above, some of the cooling air W that has flowed onto the duct panel 40 flows through the slits 42 and down into the space 22 provided below the duct panel 40, as illustrated in Fig. 5. The cooling air W then flows into and through the paths 24, cools the battery modules 23, or the battery cells 25, by taking heat therefrom, flows through the openings 29A of the seats 29 onto the bottom 20b of the case 20, returns into the evaporator 31, is cooled by the evaporator 31, and flows onto the duct panel 40 again.

Referring to Fig. 5, some of the cooling air W on the duct panel 40 flows through the introduction holes 43 into the space 22 provided below the duct panel 40. The cooling air W then flows into the intervals 28, cools the battery modules 23, or the battery cells 25, near the intervals 28 by taking heat therefrom, and disperses the heat accumulated in the intervals 28. The cooling air W thus flowed into the intervals 28 flows along the bottom 20b of the case 20, returns into the evaporator 31, is cooled by the evaporator 31, and flows onto the duct panel 40 again.

As described above, the cold air generated by the evaporator 31 and serving as the cooling air W flows along the duct panel 40 while spreading over the arrangement area 26 where the battery modules 23 are provided, and flows downward through the slits 42. Hence, the battery modules 23, or the battery cells 25, as a whole can be cooled. Moreover, some cooling air W that has flowed down through the introduction holes 43 can cool areas around the intervals 28. Therefore, each of the battery modules 23 can be cooled efficiently.

Meanwhile, the slits 42 each extend along the surfaces 25A and 25B extending in the long-side direction of the battery cells 25. Consequently, the battery cells 25 can be cooled efficiently. Furthermore, since the cooling air W having flowed down from the introduction holes 43 is dispersed above the intervals 28, the heat accumulated in the intervals 28 is easily dispersed. Therefore, the cooling efficiency is improved.

### Second Embodiment

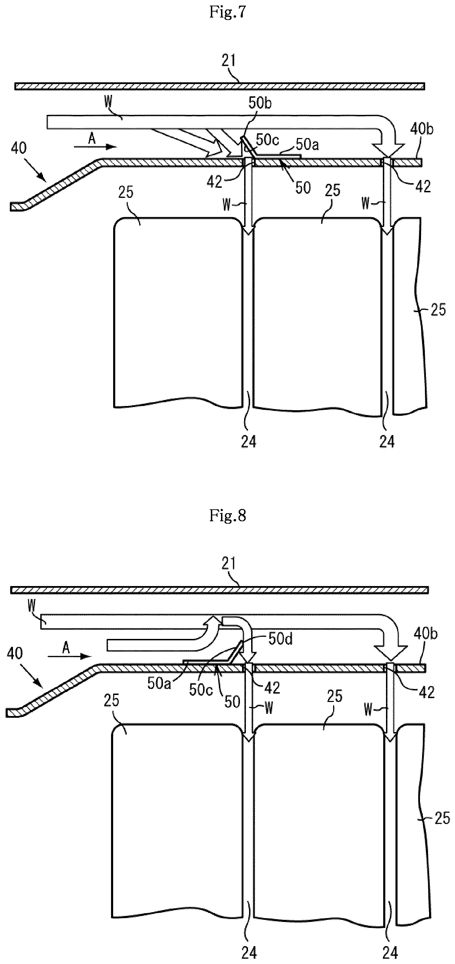

A second embodiment illustrated in Figs. 6, 7, and 8 is obtained by adding vanes 50 serving as cooling-air-adjusting portions to the configuration according to the first embodiment. The vanes 50 adjust the volume of cooling air W that flows through the slits 42 serving as the cooling-air-introducing portions. Figs. 6 and 7 illustrate a case where the vanes 50 are each provided on the downstream side of some of the slits 42 in a cooling-air flow direction A. Fig. 8 illustrates a case where the vanes 50 are each provided on the upstream side of some of the slits 42 in the cooling-air flow direction A.

The vane 50 illustrated in Fig. 7 includes an attached portion 50a and an inclined portion 50c. The attached portion 50a is positioned on the downstream side with respect to the slits 42 and is attached to the bottom part 40b serving as a part of the guiding member that faces the cover 21. The inclined portion 50c is inclined with respect to the attached portion 50a, with an upstream end 50b of the vane 50 raised upward in such a manner as to face against the cooling air W. In the second embodiment, the vane 50 is oriented such that the inclined portion 50c extends from the downstream side toward the space above the slits 42.

If the vane 50 is provided on the downstream side of the slits 42 in the cooling-air flow direction A as described above, some of the cooling air W hits and is blocked by the inclined portion 50c extending above the slits 42 and is therefore easily taken into the slits 42. Thus, the volume of cooling air W that is taken into the slits 42 can be adjusted, and the cooling efficiency is further improved. In the case where the vane 50 is provided on the downstream side of the slits 42 in the cooling-air flow direction A, it is effective to provide the vane 50 on the downstream side of some slits 42, corresponding to arbitrary cooling-air-introducing portions, into which the cooling air W is difficult to be taken.

The vane 50 illustrated in Fig. 8 includes an attached portion 50a that is positioned on the upstream side with respect to the slits 42 and is attached to the bottom part 40b, and an inclined portion 50c that is inclined with respect to the attached portion 50a with a downstream end 50d thereof raised in a direction away from the slits 42 and in such a manner as to face against the cooling air W. In the second embodiment, the vane 50 is oriented such that the inclined portion 50c is positioned on the upstream side with respect to the slits 42. In this case, the vane 50 illustrated in Fig. 7 is turned on the vertical axis by 180 degrees, so that the same component can be used.

If the vane 50 is provided on the upstream side of the slits 42 in the cooling-air flow direction A as described above, some of the cooling air W hits the inclined portion 50c before reaching the slits 42 and is therefore guided in a direction away from the slits 42, or upward in Fig. 8. Thus, the volume of cooling air W that is taken into the slits 42 can be reduced.

Hence, in the case where the vane 50 is provided on the upstream side of the slits 42 in the cooling-air flow direction A, the vane 50 may be positioned on the upstream side of some slits 42, corresponding to arbitrary cooling-air-introducing portions, that are provided in areas where the cooling efficiency is high and the necessity of cooling air W is low. Thus, some cooling air W that is saved in such areas can be introduced into other slits 42 and other introduction holes 43. Consequently, efficient cooling is realized without increasing the number of fans 32 unnecessarily. Furthermore, the nonuniformity in the cooling effect is reduced.

### Third Embodiment

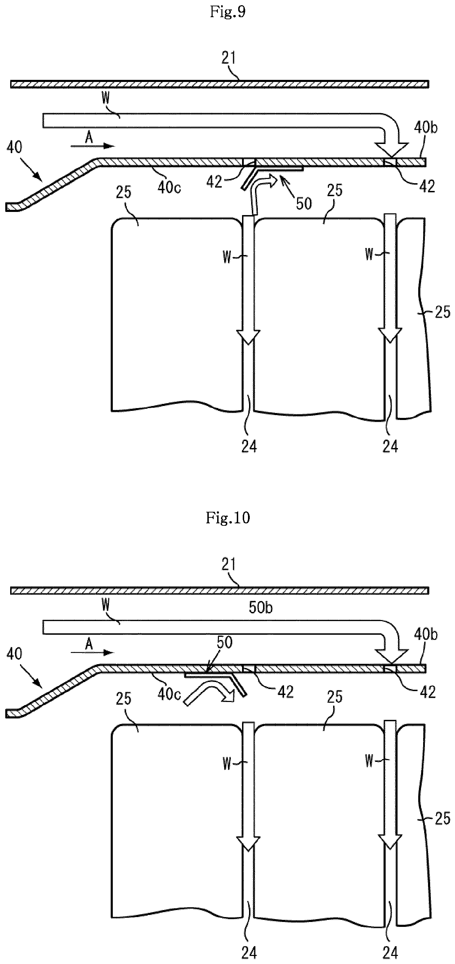

A third embodiment illustrated in Figs. 9 and 10 is obtained by providing the vanes 50 according to the second embodiment on a back side 40c of the duct panel 40 serving as a part of the guiding member that faces the battery modules 23.

In the case illustrated in Fig. 9, the vane 50 illustrated in Fig. 7 is provided on the downstream side of the slits 42 in such a manner as to be line symmetrical to the vane 50 illustrated in Fig. 7 about the duct panel 40. In the case illustrated in Fig. 10, the vane 50 illustrated in Fig. 8 is provided on the upstream side of the slits 42 in such a manner as to be line symmetrical to the vane 50 illustrated in Fig. 8 about the duct panel 40. In the third embodiment, the vane 50 is provided such that the inclined portion 50c is positioned right below the slits 42.

If the vane 50 is provided on the back side 40c of the duct panel 40 and is thus oriented downward as described above, the reverse flow of the cooling air W from the slits 42 that may be caused by the variation in the pressure distribution is suppressed. Thus, insufficiency in the cooling effect due to insufficiency in the volume of cooling air W is reduced. Consequently, the cooling efficiency is improved, and the variation in the cooling effect is reduced.

### Fourth Embodiment

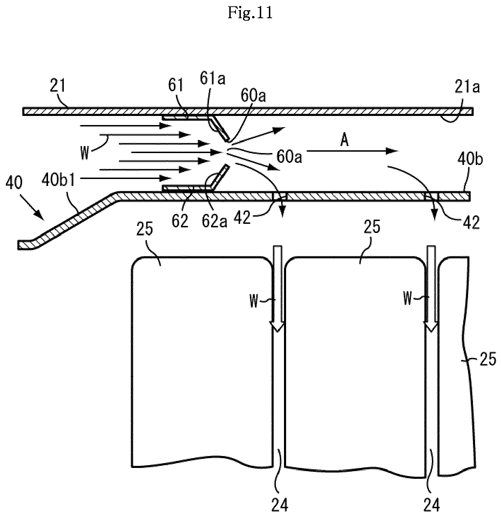

A fourth embodiment illustrated in Fig. 11 is obtained by adding flow-path-narrowing portions 60 to the configuration according to the first embodiment. The flow-path-narrowing portions 60 each narrow the cross-sectional area of the flow path provided by the combination of the cover 21 and the guiding member (duct panel) 40. Thus, the flow-path-narrowing portions 60 each serve as a cooling-air-adjusting portion that adjusts the volume of cooling air W. The flow-path-narrowing portion 60 has an aperture 60a on the downstream side thereof in the cooling-air flow direction A. The aperture 60a has an opening area smaller than the opening area on the upstream side of the flow-path-narrowing portion 60 in the cooling-air flow direction A. The flow-path-narrowing portion 60 includes guide vanes 61 and 62 that are attached to the bottom part 40b of the duct panel 40 and a back side 21a of the cover 21, respectively. The guide vanes 61 and 62 include respective inclined portions 61a and 62a that are inclined toward each other.

If the flow-path-narrowing portions 60 are provided between the duct panel 40 and the cover 21 as described above, the speed and the volume of cooling air W flowing toward the downstream side, in the cooling-air flow direction A, with respect to the aperture 60a of each of the flow-path-narrowing portions 60 can be adjusted by adjusting the size and the position of the aperture 60a and the number of flow-path-narrowing portions 60. Accordingly, the volume of cooling air W that flows into the slits 42 and the introduction holes 43 can be adjusted. For example, the duct panel 40 has its long side extending in the vehicle front-rear direction E such that the cooling air W flows from the side of the front end 40b1 toward the rear side ER of the vehicle 1. Therefore, as the cooling air W flows in a direction away from the front end 40b1, the cooling air W tends to be dispersed and the flow speed thereof is reduced. Consequently, the cooling air W might not reach a rear end 40b2 of the duct panel 40. However, if the flow-path-narrowing portion 60 is provided for each of the rows of the battery modules 23 that are arranged side by side in the vehicle width direction D or if the flow-path-narrowing portion 60 is provided near the center of the duct panel 40 in the vehicle front-rear direction E, the range over which the cooling air W reach and the volume of cooling air W can be adjusted for individual rows. Thus, insufficiency in the cooling effect due to insufficiency in the volume of cooling air W is reduced. Consequently, the cooling efficiency is improved, and the variation in the cooling effect is reduced.

### Fifth Embodiment

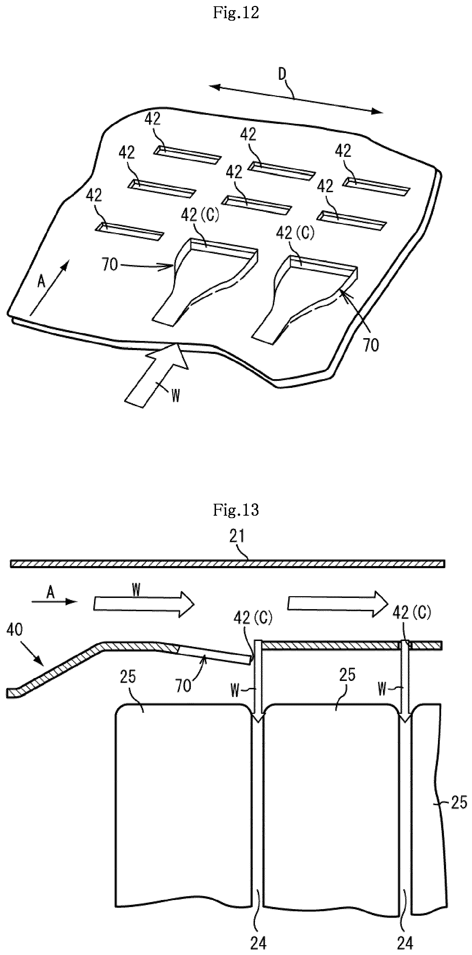

A fifth embodiment illustrated in Figs. 12 and 13 is obtained by adding ducts 70 to the configuration according to the first embodiment. Each of the ducts 70 serves as a cooling-air-adjusting portion. The width of the duct 70 is larger on the downstream side in the cooling-air flow direction A than on the upstream side. The duct 70 is provided on the upstream side with respect to an upstreammost slit 42(C) of each arbitrary row of slits 42 that are arranged side by side in the cooling-air flow direction A. In the fifth embodiment, the duct 70 is formed as a NACA duct in the bottom part 40b of the duct panel 40 and on the upstream side of each of two rows of slits 42. The duct 70 is continuous with the back side 40c.

In the case where the duct 70 is provided on the upstream side of the row of slits 42 as described above, the volume of cooling air W that is taken into the slits 42 provided on the downstream side with respect to the duct 70 can be adjusted as illustrated in Fig. 13. Specifically, in the row of slits 42 that is provided with the duct 70, the cooling air W flows from the duct 70 toward the battery modules 23 efficiently. Therefore, the battery modules 23 and the battery cells 25 near the duct 70 can be cooled efficiently. Hence, if the duct 70 is provided near some battery modules 23 whose temperature tends to become higher than the temperature of the other battery modules 23, the battery modules 23 having higher temperature can be cooled effectively. Consequently, the cooling efficiency is improved, and the variation in the cooling effect is reduced.

### Sixth Embodiment

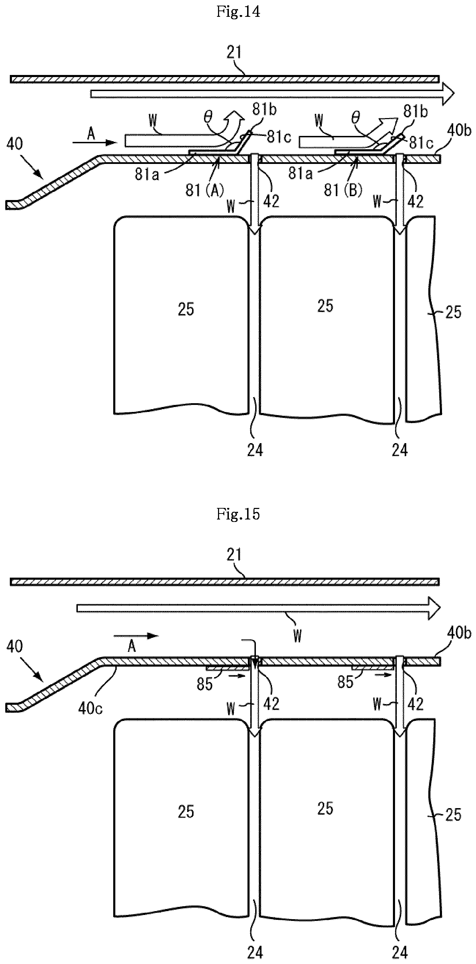

A sixth embodiment illustrated in Fig. 14 is obtained by adding members each serving as a cooling-air-adjusting portion to the configuration according to the first embodiment. The member controls the volume of cooling air W that flows into the slits 42, serving as cooling-air-introducing portions, by the shape thereof that changes with temperature.

The cooling-air-adjusting portion according to the sixth embodiment is a vane 81 made of a shape-memory alloy. The shape of the vane 81 changes with temperature. As with the vane 50 according to the second embodiment, the vane 81 includes an attached portion 81a attached to the bottom part 40b, and an inclined portion 81c that is inclined with a rear end 81b thereof raised in a direction away from the slits 42. An angle θ between the inclined portion 81c and the attached portion 81a of the vane 81 changes with temperature. Fig. 14 illustrates an exemplary configuration in which two vanes 81 are provided at respective positions in the cooling-air flow direction A. A vane 81(A) on the upstream side is at a high temperature. A vane 81(B) on the downstream side is at a low temperature. The inclined portion 81c of the vane 81(A) that is at a high temperature is raised significantly in a direction away from the bottom part 40b, and the angle θ is therefore small. The inclined portion 81c of the vane 81(B) that is at a low temperature is raised less significantly from the bottom part 40b than the inclined portion 81c of the vane 81(A) that is at a high temperature, and the angle θ is therefore large. Hence, the inclined portion 81c of the vane 81(B) covers a larger area of the slits 42 provided in the bottom part 40b than the inclined portion 81c of the vane 81(A). Thus, the occurrence of backward flow of the cooling air W from the slits 42 is suppressed. Note that the temperature referred to herein may be either the temperature of the vane 81 or the temperature of the cooling air W.

If the vane 81 whose angle θ changes with temperature as described above is provided on the upstream side of the slits 42 in the cooling-air flow direction A as described above, some of the cooling air W hits the inclined portion 81c before reaching the slits 42 and flows in a direction away from the slits 42. That is, the volume of the cooling air W that is guided upward in Fig. 14 changes with temperature. Thus, the volume of cooling air W that is taken into the slits 42 can be adjusted in accordance with temperature. Hence, efficient cooling is realized by providing the vanes 81 in correspondence with the distribution of temperature of the battery modules 23, or the battery cells 25.

While some preferable embodiments of the present invention have been described above, the present invention is not limited to such specific embodiments. Unless otherwise described specifically above, various modifications and changes can be made to those embodiments within the scope of the present invention that is defined by the appended claims.

While the sixth embodiment concerns a case where the volume of cooling air W that flows into the slits 42 is adjustable by changing the angle θ of each of the vanes 81 with temperature, the present invention is not limited to such an embodiment. For example, referring to Fig. 15, slidable plates 85 may be provided slidably on the back side 40c of the duct panel 40 and near respective slits 42 where the volume of cooling air W is desired to be adjusted, whereby the opening areas of the slits 42 may be adjusted. The slidable plates 85 each change the shape thereof with temperature. In such a case also, the slidable plates 85 are made of a shape-memory alloy so that the length thereof changes with temperature. Thus, the volume of cooling air W that flows into the slits 42 can be adjusted in accordance with temperature.

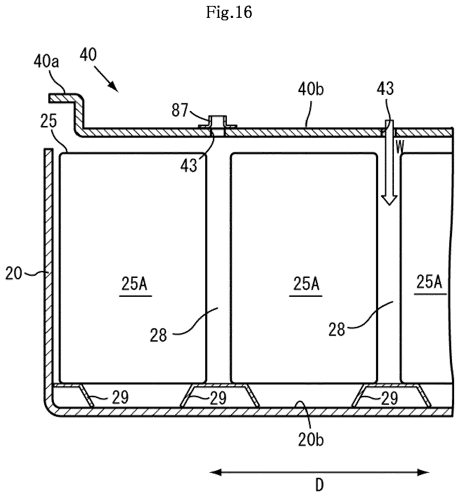

To adjust the volume of cooling air W that flows into the introduction holes 43, the peripheries of some introduction holes 43 may be burred. In such a case, the introduction holes 43 may be burred in the process of providing the introduction hole 43 itself. Alternatively, as illustrated in Fig. 16, a burred member 87 may be attached over each of desired introduction holes 43 afterward.

As illustrated in Fig. 16, the burred periphery of the introduction hole 43 makes it difficult for the cooling air W to flow into the introduction hole 43. Hence, a difference can be produced between the volume of cooling air W that flows into the burred introduction hole 43 and the volume of cooling air W that flows into the non-burred introduction hole 43. That is, if the burred introduction holes 43 and the non-burred introduction holes 43 are distributed in accordance with the temperature distribution of the battery modules 23, or the battery cells 25, the variation in the cooling effect among the battery modules 23 can be reduced, and efficient cooling is realized preferably.

The advantageous effects described in the above embodiments of the present invention are only examples of preferable advantageous effects that are produced by the present invention. Advantageous effects of the present invention are not limited to those described in the above embodiments of the present invention.

## Claims

1. A battery-pack-cooling device (30) that cools a battery pack (2), the battery pack including a plurality of battery modules (23) that are provided in a space enclosed by a case (20) and a cover (21), the plurality of battery modules (23) being arranged at intervals, the device comprising:
a guiding member (40) provided in the space to cover, from above, an area where the plurality of battery modules (23) are arranged and to guide cooling air generated by a cooling-air-generating unit (34); and
a cooling-air-introducing portion (42, 43) provided to the guiding member (40) and that introduces the cooling air guided by the guiding member (40) into at least one of a space above the battery modules (23) and a space between adjacent ones of the battery modules (23).

2. The battery-pack-cooling device according to Claim 1,
wherein the battery modules (23) each include a plurality of battery cells (25) arranged side by side such that a path is provided between adjacent ones of the battery cells (25), and
wherein the cooling-air-introducing portion includes
a slit (42) provided above the battery modules (23) and extending in a direction intersecting, in a specific plane, a direction in which the battery cells (25) are arranged side by side, the slit (42) overlapping the path; and
an introduction hole (43) provided between adjacent ones of the battery modules (23).

3. The battery-pack-cooling device according to Claim 1 or 2, further comprising a cooling-air-adjusting portion (50) that adjusts a volume of cooling air flowing into the cooling-air-introducing portion (42, 43).

4. The battery-pack-cooling device according to Claim 3,
wherein the cooling-air-introducing portion (42) is one of a plurality of cooling-air-introducing portions (42), and
wherein the cooling-air-adjusting portion (50) is provided on an upstream side with respect to an arbitrary one of the cooling-air-introducing portions (42) in a cooling-air flow direction.

5. The battery-pack-cooling device according to Claim 3,
wherein the cooling-air-introducing portion (42) is one of a plurality of cooling-air-introducing portions (42), and
wherein the cooling-air-adjusting portion (50) is provided on a downstream side with respect to an arbitrary one of the cooling-air-introducing portions (42) in a cooling-air flow direction.

6. The battery-pack-cooling device according to Claim 4 or 5, wherein the cooling-air-adjusting portion (50) is provided to at least one of a part of the guiding member (40) that faces the cover (21) and a part of the guiding member (40) that faces the battery modules (23).

7. The battery-pack-cooling device according to Claim 3, wherein the cooling-air-adjusting portion is a portion (60) that adjusts the volume of cooling air, the portion (60) narrowing a cross-sectional area of a cooling-air flow path provided in the space enclosed by the case (20) and the cover (21).

8. The battery-pack-cooling device according to Claim 3,
wherein the cooling-air-introducing portion (42) is one of a plurality of cooling-air-introducing portions (42),
wherein the cooling-air-introducing portions (42) are arranged side by side in a cooling-air flow direction, and
wherein the cooling-air-adjusting portion is a duct (70) whose width is larger on a downstream side in the cooling-air flow direction than on an upstream side in the cooling-air flow direction.

9. The battery-pack-cooling device according to Claim 3, wherein the cooling-air-adjusting portion is a member (81, 85) adapted to control the volume of cooling air that flows into the cooling-air-introducing portion (42) by a shape of the cooling-air-adjusting portion that changes with temperature.
